## Europäisches Patentamt
## European Patent Office
## Office européen des brevets

(19)

(11) Numéro de publication: **0 088 020**
**B1**

(12)

# FASCICULE DE BREVET EUROPEEN

(45) Date de publication du fascicule du brevet:
**13.11.85**

(51) Int. Cl.⁴: **H 04 L 27/00**, H 04 L 5/02

(21) Numéro de dépôt: **83400396.4**

(22) Date de dépôt: **25.02.83**

(54) **Modulateur numérique à plusieurs niveaux d'amplitude avec compensation de composante continue.**

(30) Priorité: **02.03.82 FR 8203411**

(43) Date de publication de la demande:
**07.09.83 Bulletin 83/36**

(45) Mention de la délivrance du brevet:
**13.11.85 Bulletin 85/46**

(84) Etats contractants désignés:
**DE GB IT**

(56) Documents cités:
**EP - A - 0 031 762**
**WO - A - 80/02348**
**FR - A - 1 521 429**
**FR - A - 2 389 286**
**US - A - 3 697 874**

(73) Titulaire: **Chazenfus, Henri, 127, Rue Jeanne d'Arc,**
**F-75013 Paris (FR)**
Titulaire: **Imbeaux, Jean-Claude, 69 rue Dunois,**
**F-75646 Paris Cédex 13 (FR)**

(72) Inventeur: **Chazenfus, Henri, 127, Rue Jeanne d'Arc,**
**F-75013 Paris (FR)**
Inventeur: **Imbeaux, Jean-Claude, 69 rue Dunois,**
**F-75646 Paris.Cédex 13 (FR)**

(74) Mandataire: **Mongrédien, André et al, c/o**
**BREVATOME 25, rue de Ponthieu, F-75008 Paris (FR)**

BUNDESDRUCKEREI BERLIN

## Description

La présente invention a pour objet un modulateur numérique à plusieurs niveaux d'amplitude avec compensation de composante continue. Elle trouve une application en télécommunications et notamment en transmission numérique.

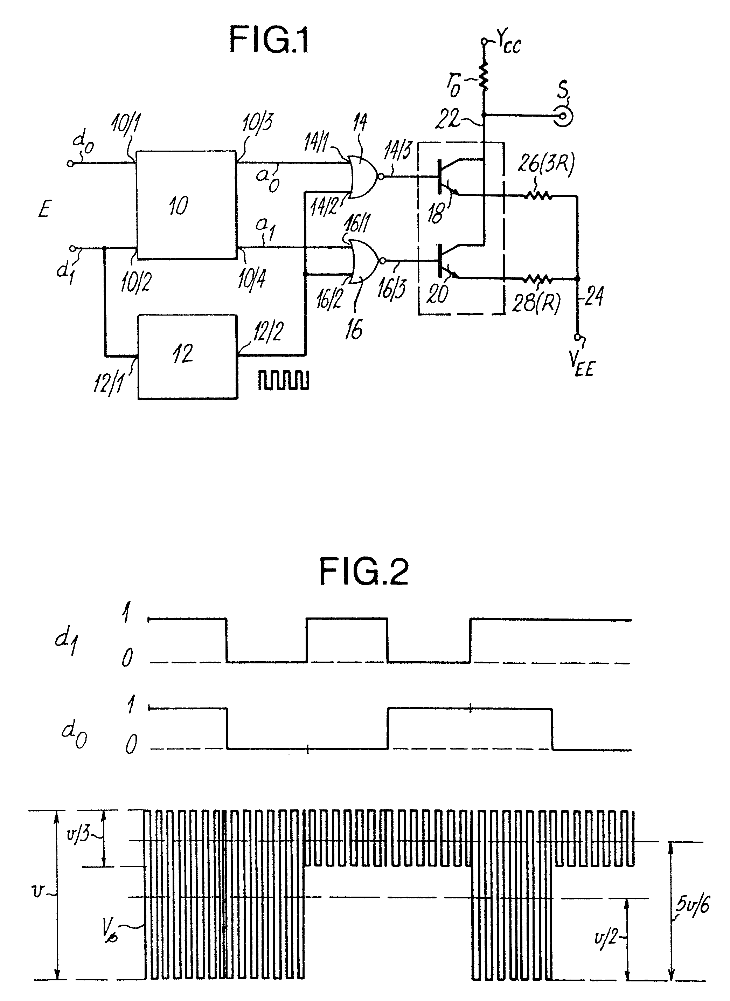

Un modulateur numérique d'un type connu est représenté sur la figure 1. Il comprend:

— une entrée B à deux accès recevant des données numériques $d_0$, $d_1$,
— un circuit de transcodage 10 à deux entrées 10/1, 10/2 reliées aux deux accès et à deux sorties 10/3, 10/4 délivrant des données numériques transcodées $a_0$, $a_1$,
— un générateur de porteuse 12, à une entrée 12/1 de commande de phase, reliée en l'occurrence à l'entrée 10/2 et à une sortie 12/2 délivrant un signal dont la phase est égale à 0 ou $\pi$ selon la valeur de $d_1$,
— un convertisseur numérique-analogique comprenant deux étages, le premier formé de deux portes logiques 14, 16 (en l'occurrence de type NON-OU) à deux entrées, respectivement 14/1, 14/2 et 16/1, 16/2 et une sortie, respectivement 14/3, 16/3, les entrées 14/1, 16/1 étant reliées aux sorties 10/3, 10/4 du circuit de transcodage 10, et les entrées 14/2, 16/2 à la sortie 12/2 du générateur, le second étage étant formé par deux transistors 18, 20 dont les bases sont reliées aux sorties 14/3, 16/3 des portes logiques, les collecteurs à une première ligne 22 portée à un potentiel $V_{cc}$ à travers une résistance $r_0$ et les émetteurs, à travers deux résistances de charge 26, 28 de valeur 3R et R à une seconde ligne 24 portée à un potentiel $V_{EE}$;
— une sortie S constituée par une ligne de charge adaptée reliée à la première ligne 22.

Le fonctionnement de ce circuit est le suivant. Le générateur de porteuse 12 délivre un signal rectangulaire dont la fréquence est la fréquence porteuse, et dont la phase est 0 ou $\pi$ selon que la donnée $d_1$ vaut 1 ou 0.

Le circuit de transcodage 10 fournit deux données $a_0$, $a_1$ définies à partir des données $d_0$, $d_1$ selon le tableau ci-dessous qui donne aussi la phase du signal rectangulaire:

| $d_1$ | $d_0$ | $a_1$ | $a_0$ | Phase | Niveau |
|-------|-------|-------|-------|-------|--------|
| 1 | 1 | 0 | 1 | 0 | +3 |
| 1 | 0 | 1 | 0 | 0 | +1 |
| 0 | 1 | 1 | 0 | $\pi$ | −1 |
| 0 | 0 | 0 | 1 | $\pi$ | −3 |

La résistance de charge 26 du transistor 18 commandé par l'intermédiaire de $a_0$ est de valeur trois fois plus grande que la résistance de charge 28 du transistor 20 commandé par l'intermédiaire de $a_1$ (soit respectivement 3R et R). Les deux niveaux d'amplitude possibles en sortie S sont donc dans un rapport 3. Ces niveaux sont indiqués en valeurs relatives dans la dernière colonne du tableau précédent (le signe + correspond à la phase 0 et le signe − à la phase $\pi$).

La figure 2 représente le signal obtenu en sortie du modulateur (en bas), en fonction des valeurs des données (en haut).

Le circuit qui vient d'être décrit est connu. La partie conversion numérique-analogique est décrite dans la demande de brevet français FR-A-2 454 726 et la partie modulation de l'onde porteuse dans la demande de brevet français FR-A-2 472 876.

Un tel modulateur présente l'inconvénient de délivrer un signal qui possède une composante continue car les deux tensions qui le composent n'ont pas la même valeur moyenne. En effet, comme il apparaît clairement sur la figure 2, pour $d_1 = d_0$, la valeur moyenne de la tension est $v/2$, si $v$ désigne l'amplitude maximum, alors que pour $d_1 \neq d_0$, la valeur moyenne est égale à

$$v - v/6 = \frac{5v}{6}.$$

Il en résulte que le spectre du signal modulé comporte, en plus de la composante autour de la fréquence porteuse, une composante basse-fréquence.

Ces deux composantes du spectre sont suffisamment écartées, lorsque la vitesse de modulation est faible par rapport à la fréquence porteuse, pour qu'un filtre, constitué par un simple condensateur de liaison, élimine la partie basse fréquence du spectre sans modifier la partie utile située autour de la freéquence porteuse. Mais lorsque la vitesse de modulation n'est plus négligeable par rapport à la fréquence de la porteuse, la partie basse fréquence du spectre et la partie utile située autour de la fréquence porteuse se chevauchent. Il n'est alors plus possible d'éliminer la partie basse fréquence sans distordre la partie utile.

Le but de la présente invention est justement d'éliminer cet inconvénient, en fournissant un signal modulé à plusieurs niveaux d'amplitude, qui soit correctement centré, et ne présente donc plus de composante spectrale indésirable en basse fréquence. Sous réserve de l'utilisation d'une onde porteuse ne comportant pas d'harmonique 2, les difficultés de filtrage du signal modulé rencontrées lors de l'utilisation de la technique antérieure sont éliminées. A cette fin, le modulateur objet de l'invention, qui est encore du type de celui qui vient d'être décrit, est complété par un circuit de compensation de composante continue destiné à centrer le signal modulé. Le principe de ce circuit consiste à superposer au signal non centré une composante continue variable en fonction des données, donc en fonction du niveau d'amplitude émis, de telle manière que le signal résultant soit toujours centré autour de sa composante continue moyenne. De façon plus précise, dans le cas du signal représenté par la figure 2, le niveau moyen continu est v/2 lorsque l'amplitude alternative est v, et 5 v/6 lorsque l'amplitude alternative est v/3. On peut recentrer le signal en diminuant la composante continue de 5 v/6 − v/2 = v/3 lorsque l'amplitude alternative est v/3, c'est-à-dire lorsque $a_1 = 1$.

Une autre solution consisterait à augmenter de v/3 la composante continue du signal obtenu lorsque $a_1 = 0$.

Pour obtenir ce décalage, il est fait usage d'un élément supplémentaire dans l'étage logique commandé par $a_1$ (ou $a_0$) et d'un transistor dans l'étage de conversion pour ajouter la composante continue de recentrage.

De façon plus précise, l'invention a donc pour objet un modulateur numérique du genre de celui qui vient d'être décrit et qui est caractérisé en ce qu'il comprend en outre un circuit de compensation constitué par au moins une porte logique supplémentaire disposée dans le premier étage du convertisseur, cette porte ayant une entrée reliée à l'une des sorties du circuit de transcodage et une sortie, et par au moins un transistor supplémentaire disposé dans le second étage du convertisseur, ce transistor ayant une base reliée à la sortie de la porte supplémentaire, un collecteur relié à la première ligne et un émetteur relié à la seconde ligne par une résistance de valeur appropriée, ce circuit de compensation provoquant, pour l'une au moins des tensions modulées de sortie, un décalage de sa valeur moyenne qui ramène cette valeur moyenne au niveau de la valeur moyenne des autres tensions, le signal de sortie modulé étant alors formé de tensions de phases et d'amplitudes différentes, mais toutes centrées sur une valeur moyenne commune.

De toute façon les caractéristiques de l'invention apparaîtront mieux après la description qui suit, d'un exemple de réalisation donné à titre explicatif et nullement limitatif.

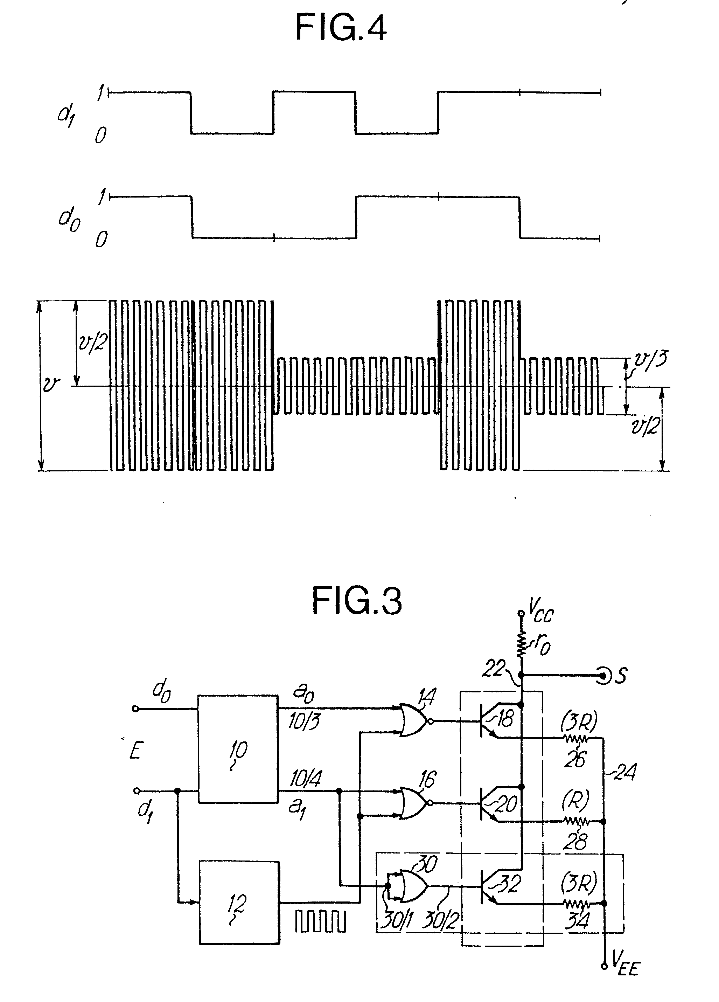

Le circuit de l'invention est représenté sur la figure 3 dans le cas d'une modulation à 4 niveaux antipodaux. Ce circuit contient tous les moyens déjà illustrés sur la figure 1; en outre et conformément à l'invention, il comprend un circuit de compensation qui, dans le cas illustré, est constitué par une porte logique supplémentaire 30, du type OU (alors que les portes 14, 16 sont de type NON-OU) commandée par $a_1$, et un transistor 32. Ce dernier possède une base reliée à la sortie 30/2 de la porte 30, un collecteur à la première ligne 22 et un émetteur à la seconde ligne 24 par l'intermédiaire d'une résistance de charge 34 de valeur 3R, c'est-à-dire de même valeur que la résistance de charge 26 associée au transistor 18 et à la porte 14 commandée par $a_1$. Le courant délivré par le transistor 32 lorsque $a_1$ est à 1 correspond à une tension de sortie continue égale à v/3 sur la ligne adaptée S. Le niveau moyen du signal de sortie est donc ramené au niveau moyen de la tension obtenue lorsque $a_1 = 0$. C'est ce qui est représenté sur la figure 4.

Naturellement, comme indiqué plus haut, on pourrait agir aussi sur la tension d'amplitude v en la remontant de $+\dfrac{v}{3}$. On pourrait aussi décaler la tension d'amplitude v de $+\dfrac{v}{6}$ et la tension d'amplitude $\dfrac{v}{3}$ de $\dfrac{v}{6}$.

Ce principe de compensation de composante continue est valable pour un nombre quelconque de niveaux d'amplitude. Il s'applique donc à toutes les modulations numériques d'amplitude, que ce soit sur une porteuse, ou sur deux porteuses en quadrature.

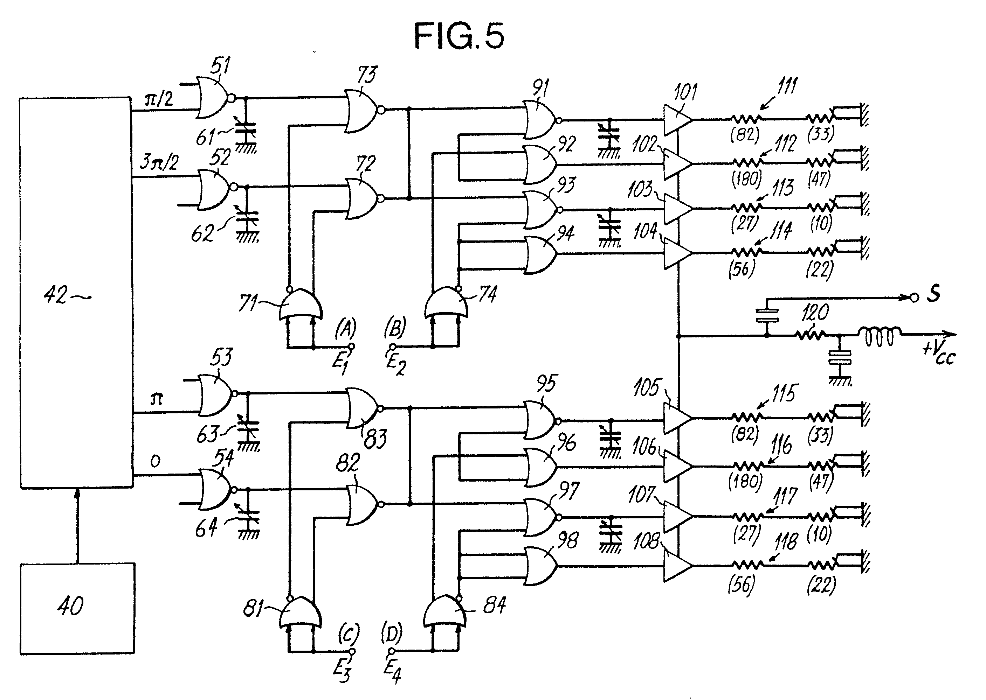

A titre d'exemple supplémentaire, la figure 5 représente un mode particulier de réalisation d'un modulateur pour transmission en double modulation d'amplitude à quatre niveaux, sur deux porteuses en quadrature (modulation dite 2MA4Q), dont le principe (sans compensation) est décrit dans le document Fr-A-2 472 876, déjà cité.

Le mode de réalisation illustré utilise des circuits intégrés en logique ECL. Le circuit représenté comprend d'abord un oscillateur 40 fonctionnant à 280 MHz suivi d'un diviseur par quatre 42 délivrant quatre tensions en quadrature à la fréquence de 70 MHz. Le circuit comprend ensuite en premier étage constitué de deux portes 51 et 52 munies de deux condensateurs réglables, une porte 71 reliés à une première entrée $E_1$, deux portes de modulation 72, 73 à deux entrées recevant, d'une part, la porteuse avec une phase de $\pi/2$ ou $3\pi/2$, et d'autre part la donnée numérique A appliquée sur une entrée $E_1$, une porte 74 à une entrée reliée à une seconde entrée $E_2$ recevant une seconde donnée numérique B, et à deux sorties complémentaires, quatre portes 91 à 94 munies de quatre circuits à transistors 101 à 104, dont les sorties sont reliées à la masse par quatre résistances 111 à 114, chacune comportant une résistance fixe et un potentiomètre.

Le modulateur représenté comprend un second étage identique au premier mais travaillant avec les signaux de phase 0 et $\pi$ délivrés par le circuit 42. On retrouve donc deux portes 53, 54 associées à deux condensateurs réglables 63, 64, une porte 81 reliée à une entrée $E_3$ recevant une donnée numérique C, deux portes 82, 83 de modulation, une porte 84 reliée à une quatrième entrée $E_4$ recevant une quatrième donnée numérique D, des portes 95 à 98, quatre circuits de sortie 105 à 108, associés à quatre jeux de résistances 115 à 118.

Le fonctionnement de ce circuit est le suivant.

Le circuit 42 (qui est par exemple de type 100131 de la Société FAIRCHILD) réalise une division par 4 de la fréquence du signal délivré par l'oscillateur 40 et fournit quatre signaux à 70 MHz déphasés de $\pi/2$

$$\left(\text{soit } 0,\ \frac{\pi}{2},\ \pi,\ \frac{3\pi}{2}\right).$$

Les phases sont réglées avec précision par les condensateurs ajustables 61 à 64 placés en sortie des portes 51 à 54, lesquelles peuvent être de type 1662 de la Société MOTOROLA.

Les quatre bits A, B, C et D résultant d'un codage des données, définissent un état de la porteuse modulée choisi parmi 16 états possibles. Le bit A permet de choisir la phase $\pi/2$ ou $3\pi/2$ et le bit B détermine l'amplitude de la porteuse, en agissant sur les portes 91 et 93 qui commandent les étages de sortie (ces derniers peuvent être du type 100122). Les niveaux sont réglés par les potentiomètres en série avec les résistances de charge ($27\,\Omega + 10\,\Omega$ pour le niveau 3, $82\,\Omega + 33\,\Omega$ pour le niveau 1). A chaque niveau d'amplitude de la porteuse est associé un circuit de compensation de composante continue. Le bit B agit également sur ces circuits de compensation par les portes 92 et 94, qui sont du type 1664, et les étages de sortie correspondants. La résistance 112 de $180\,\Omega$ et le potentiomètre en série de $47\,\Omega$ déterminent la compensation lorsque le niveau 3 est émis. La résistance 114 de $56\,\Omega$ et le potentiomètre en série de $22\,\Omega$ déterminent la compensation lorsque le niveau 1 est émis.

On retrouve les mêmes moyens sur la voie en quadrature (porteuses de phase 0 ou $\pi$), commandée par les bits C et D.

Le signal de sortie centré est recueilli aux bornes de la résistance de charge 120 (de valeur 50 Ohms) reliée aux collecteurs des circuits de sortie 101 à 108.

## Revendications

1. Modulateur numérique comprenant un circuit de transcodage (10) à plusieurs entrées numériques (10/1, 10/2) aptes à recevoir des données numériques ($d_0$, $d_1$, ...) et à autant de sorties (10/3, 10/4) délivrant des données numériques transcodées ($a_0$, $a_1$, ...), un générateur (12) d'au moins une porteuse, à au moins une entrée (12/1) de commande de sa phase et au moins une sortie (12/2) délivrant au moins une porteuse ayant une phase déterminée; un convertisseur numérique analogique comprenant un premier étage formé de portes logiques (14, 16) à deux entrées (14/1, 14/2, 16/1, 16/2) et une sortie (14/3, 16/3), l'une des entrées (14/1, 16/1) étant reliée à l'une des sorties (10/3, 10/4) du circuit de transcodage (10), l'autre (14/2, 16/2) à l'une des sorties (12/2) du générateur et un second étage formé par autant de transistors (18, 20) qu'il y a de portes logiques, chaque transistor possédant un émetteur, une base et un collecteur, la base de chacun des transistors étant reliée à la sortie (14/3, 16/3) d'une porte logique, tous les collecteurs étant reliés, via une première ligne (22) en série avec une résistance ($r_0$), à une alimentation ($V_{cc}$), tous les émetteurs étant reliés à travers des résistances de charge de valeurs différentes (26, 28) à une seconde ligne (24) reliée à une alimentation ($V_{EE}$), la sortie (S) étant constituée par une ligne de charge adaptée reliée à la première ligne (22), un tel modulateur délivrant un signal de sortie composé de tensions ayant une fréquence égale à la fréquence d'une porteuse délivrée par le générateur (12), une phase déterminée par les données d'entrée, et une amplitude déterminée par les données transcodées, les différentes amplitudes que peuvent prendre ces tensions ayant des valeurs moyennes différentes; ce modulateur étant caractérisé en ce qu'il comprend en outre un circuit de compensation constitué par au moins une porte logique supplémentaire (30) disposée dans le premier étage du convertisseur, cette porte ayant une entrée (30/1) reliée à l'une des sorties (10/4) du circuit de transcodage (10) et une sortie (30/2), et par au moins un transistor supplémentaire (32) disposé dans le second étage du convertisseur, ce transistor ayant une base reliée à la sortie (30/2) de la porte supplémentaire (30), un collecteur relié à la première ligne (22) et un émetteur relié à la seconde ligne (24) par une résistance (34) de valeur appropriée, ce circuit de compensation provoquant, pour l'une au moins des tensions modulées de sortie, un décalage de sa valeur moyenne qui ramène cette valeur moyenne au niveau de la valeur moyenne des autres tensions, le signal de sortie modulé étant alors formé de tensions de phases et d'amplitudes différentes mais toutes centrées sur une valeur moyenne commune.

2. Modulateur numérique selon la revendication 1, caractérisé en ce que, pour un modulateur à quatre niveaux d'amplitude antipodaux, le circuit de compensation comprend une porte logique (30) à une entrée (30/1) reliée à l'une des sorties (10/4) du circuit de transcodage (10) et un transistor (32) dont l'émetteur est relié à la seconde ligne (24) par une résistance (34) dont la valeur est égale à celle de la résistance (26) qui est reliée au transistor (18) correspondant à l'autre sortie (10/3) du circuit de transcodage (10).

3. Modulateur numérique selon la revendication 1, caractérisé en ce que le générateur délivre deux porteuses en quadrature et en ce que le second étage réalise une modulation d'amplitude à 4 ou 8 niveaux par porteuse.

## Patentansprüche

1. Digitaler Modulator mit einem Umkodierungskreis (10) mit mehreren Digitaleingängen (10/1, 10/2), die dazu bestimmt sind, digitale Eingänge ($d_0$, $d_1$, ...) aufzunehmen und der an ebenso vielen Ausgängen (10/3, 10/4) umkodierte Digitaldaten ($a_0$, $a_1$, ...) liefert, einen Generator (12) für wenigstens einen Träger mit wenigstens einem Steuereingang (12/1) für seine Phase und wenigstens einem Ausgang (12/2), der wenigstens einen Träger vorbestimmter Phase liefert; einen Digital/Analog-Wandler, enthaltend eine erste Stufe, die von logischen Torschaltungen (14, 16) mit zwei Eingängen (14/1, 14/2, 16/1, 16/2) und einem Ausgang (14/3, 16/3) gebildet ist, wobei der eine der Eingänge (14/1, 16/1) mit einem der Ausgänge (10/3, 10/4) des Umkodierungskreises (10) verbunden ist und der andere (14/2, 16/2) mit einem der Ausgänge (12/2) des Generators verbunden ist, und eine zweite Stufe, die so viele Transistoren (18, 20) aufweist, wie logische Torschaltungen vorhanden sind, wobei jeder Transistor einen Emitter, eine Basis und einen Kollektor aufweist, die Basis eines jeden der Transistoren mit einem Ausgang (14/3, 16/3) einer logischen Torschaltung verbunden ist, alle Kollektoren über eine erste Leitung (22) in Serie mit einem Widerstand ($r_0$) mit einer Stromquelle ($V_{cc}$) verbunden sind, alle Emitter über Lastwiderstände unterschiedlicher Werte (26, 28) mit einer zweiten Leitung (24) verbunden sind, die mit einer Stromquelle ($V_{EE}$) verbunden ist, der Ausgang (S) von einer angepaßten Leitung gebildet ist, die mit der ersten Leitung (22) verbunden ist, ein solcher Modulator ein Ausgangssignal liefert, das aus Spannungen besteht, die eine Frequenz gleich der Frequenz eines Trägers haben, der von dem Generator (12) geliefert wird, eine Phase von den Eintrittsgrößen und eine Amplitude von den Umkodierungsgrößen bestimmt sind, die unterschiedlichen Amplituden, die diese Spannungen annehmen können, unterschiedliche Mittelwerte aufweisen; dadurch gekennzeichnet, daß dieser Modulator weiterhin einen Kompensationskreis enthält, der gebildet ist von wenigstens einer zusätzlichen logischen Torschaltung (30), die in der ersten Stufe des Wandlers angeordnet ist, wobei diese Torschaltung einen Eingang (30/1), der mit einem der Ausgänge (10/4) des Umkodierungskreises (10) verbunden ist, und einen Ausgang (30/2) aufweist, und durch wenigstens einen zusätzlichen Transistor (32), der in der zweiten Stufe des Wandlers angeordnet ist, wobei dieser Transistor an seiner Basis mit einem Ausgang (30/2) der zusätzlichen Torschaltung (30), mit seinem Kollektor mit der ersten Leitung (22) und mit seinem Emitter über einen Widerstand (34) geeigneter Größe mit der zweiten Leitung (24) verbunden ist, wobei dieser Kompensationskreis für wenigstens eine der modulierten Ausgangsspannungen eine Abweichung ihres Mittelwertes hervorruft, die diesen Mittelwert auf das Niveau des Mittelwertes der anderen Spannungen zurückführt, wobei das modulierte Ausgangssignal auf diese Weise aus Spannungen unterschiedlicher Phasen und Amplituden gebildet ist, die jedoch sämtlich auf einen gemeinsamen Mittelwert zentriert sind.

2. Digitaler Modulator nach Anspruch 1, dadurch gekennzeichnet, daß für einen Modulator mit vier entgegengesetzten Amplitudenpegeln der Kompensationskreis eine logische Torschaltung (30) aufweist, deren einer Eingang (30/1) mit einem der Ausgänge (10/4) des Umkodierungskreises (10) verbunden ist, und einen Transistor (32) aufweist, dessen Emitter mit der zweiten Leitung (24) über einen Widerstand (34) verbunden ist, dessen Wert gleich jenem des Widerstandes (26) ist, der mit dem Transistor (18) verbunden ist, der dem anderen Ausgang (10/3) des Umkodierungskreises (10) zugeordnet ist.

3. Digitaler Modulator nach Anspruch 1, dadurch gekennzeichnet, daß der Generator zwei um 90° phasenverschobene Träger liefert und daß die zweite Stufe eine Amplitudenmodulation mit vier oder acht Pegeln pro Träger realisiert.

**Claims**

1. Digital modulator comprising a transcoder circuit (10) having a plurality of digital inputs (10/1, 10/2) suitable to receive digital data ($d_0$, $d_1$) and having as many outputs (10/3, 10/4) delivering transcoded digital data ($a_0$, $a_1$), a generator (12) of at least one carrier, having at least one control input (12/1) of its phase and at least one output (12/2) delivering at least one carrier having a controlled phase; a digital to analog converter comprising a first stage formed by logic gates (14, 16) having two inputs (14/1, 14/2, 16/1, 16/2) and an output (14/3, 16/3), one of the inputs (14/1, 16/1) being connected to one of the outputs (10/3, 10/4) of the transcoder circuit (10), the other (14/2, 16/2) being connected to one of the generator outputs (12/2) and a second stage formed by as many transistors (18, 20) as there are logic gates, each transistor having an emitter, a base and a collector, the base of each of the transistors being connected to the output (14/3, 16/3) of a logic gate, all of the collectors being connected via a first line (22) in series with a resistance ($r_0$) to a supply ($V_{cc}$), all the emitters being connected by load resistances having different values (26, 28) to a second line (24), connected to a supply ($V_{EE}$), output (s) being formed by an adapted load line connected to the first line (22), such a modulator delivering an output signal comprising potentials having a frequency equal to the frequency of a carrier delivered by generator (12), a phase determined by input data, and an amplitude determined by the transcoded data, the different amplitudes which these potentials can take having different mean values; the modulator being characterised in that it comprises in addition a compensation circuit constituted by at least one supplementary logic gate (30) arranged in the first stage of the converter, this gate having an input (30/1) connected to one of the outputs (10/4) of the transcoder circuit (10) and an output (30/2), and by at least one supplementary transistor (32) arranged in the second stage of the converter, this transistor having a base connected to the output (30/2) of the supplementary gate (30), a collector connected to the first line (22) and an emitter connected to the second line (24) by a resistance (34) of appropriate value, this compensation circuit producing for at least one of the output modulated potentials a displacement of its mean value which restores this mean value to the level of the mean values of the other potentials, the modulated output signal thus being formed by potentials of different phases and amplitudes, but all centred on a common mean value.

2. Digital modulator according to claim 1, characterised in that the compensation circuit for a modulator having four levels of antipodal amplitude comprises a logic gate (30) having a single input (30/1) connected to one of the transcoder circuit (10) outputs (10/4) and a transistor (32) whose emitter is connected to a second line by a resistance (34), the value of which is equal to that of resistance (26), which is connected to transistor (18) corresponding to the other output (10/3) of the transcoder circuit (10).

3. Digital modulator according to claim 1, characterised in that the generator delivers two carriers in quadrature and in that the second stage realises an amplitude modulation of 4 or 8 levels per carrier.

# FIG.1

# FIG.2

0 088 020

# FIG.4

# FIG.3

9

# FIG.5